# EUROPÄISCHE PATENTSCHRIFT

(11) **EP 1 234 707 B1**
(45) Veröffentlichungstag und Bekanntmachung des Hinweises auf die Patenterteilung: **27.10.2010**
(21) Anmeldenummer: 02000170.7
(22) Anmeldetag: 09.01.2002
(51) Int. Cl.: B60K 35/00, G01P 1/08

(54) **Drehzahlanzeigeinstrument für Kraftfahrzeuge**
Engine speed indicator for motor vehicle
Indicateur de vitesse de moteur pour automobile

(30) Priorität: 23.02.2001 DE 10108934
(43) Veröffentlichungstag der Anmeldung: 28.08.2002
(73) Patentinhaber: Bayerische Motoren Werke Aktiengesellschaft, 80809 München (DE)
(72) Erfinder: Eder, Jürgen, 84091 Walkertshofen (DE)

(56) Entgegenhaltungen:
- DE-A- 3 912 359
- DE-A- 4 444 702
- DE-A- 19 755 470
- US-A- 5 020 361

## Beschreibung

Die Erfindung betrifft ein Drehzahlanzeigeinstrument für Kraftfahrzeuge nach dem Oberbegriff des Patentanspruchs 1.

Ein solches Drehzahlanzeigeinstrument ist zum Beispiel aus DE 19755470 bekannt.

Ein derartiges Drehzahlanzeigeinstrument ist beispielsweise in den aktuellen BMW M3 Kraftfahrzeugen (vgl. Betriebsanleitung Online Version XII/00, S. 70) in Serie. Dieses bekannte Drehzahlanzeigeinstrument enthält einen als Vorwarnfeld bezeichneten variabel beleuchtbaren Skalenbereich, z. B. im Drehzahlbereich von 4000 U/min bis 8000 U/min. Bei kalter Brennkraftmaschine ist der gesamte Skalenbereich in Form von einzelnen Sektoren beleuchtet. Mit zunehmender Motortemperatur erlöschen mehr und mehr Sektoren dieses Skalenbereichs in Richtung höherer Drehzahlwerte (von links nach rechts). Der temperaturabhängig beleuchtete Skalenbereich zeigt an, dass eine Fahrweise gewählt werden soll, durch die Drehzahlwerte im beleuchteten Skalenbereich möglichst nicht erreicht werden. Bei warmgelaufener Brennkraftmaschine verbleibt zumindest ein rotes Warnfeld, bestehend aus den zwei letzten Sektoren des Skalenbereiches. Drehzahlwerte in diesem Warnfeld müssen vermieden werden. In diesem Bereich wird zum Schutz der Brennkraftmaschine die Kraftstoffzufuhr unterbrochen.

Dieses bekannte Drehzahlanzeigeinstrument ist insbesondere für sportliche Fahrzeuge sinnvoll. Zur Erhöhung der sportlichen Fahrweise wäre insbesondere für Handschaltgetriebe oder für zumindest teilweise automatisierte Getriebe mit manuell schaltbarem sequenziellen Modus auch die Anzeige der optimalen Schaltdrehzahl für eine manuelle Hochschaltung wünschenswert. Hierzu ist z. B. aus der Formel 1 ein Balken mit Leuchtdioden (sog. "Shiftlights") bekannt, die durch Aufleuchten von mehr und mehr orangen Leuchtdioden von links nach rechts eine Annäherung an den optimalen Hochschaltzeitpunkt und schließlich durch Aufleuchten einer letzten roten Leuchtdiode das Erreichen des optimalen Hochschaltzeitpunkts anzeigen. Dies erfordert jedoch Platz und Aufwand für eine zusätzliche Anzeigeeinheit.

Es ist Aufgabe der Erfindung, Assistenzen für sportliches Fahren zu optimieren und dabei gleichzeitig Aufwand, Platz und Kosten einzusparen.

Diese Aufgabe wird durch die Merkmale des Patentanspruchs 1 gelöst. Vorteilhafte Weiterbildungen der Erfindung sind die Gegenstände der abhängigen Ansprüche.

Erfindungsgemäß wird bei einem Drehzahlanzeigeinstrument für Kraftfahrzeuge, bei dem ein variabel beleuchtbarer Skalenbereich zur temperaturabhängigen Anzeige eines oberen Drehzahlbereichs der Brennkraftmaschine, der nicht erreicht werden soll, vorgesehen ist, mittels desselben variabel beleuchtbaren Skalenbereichs auch die Annäherung an die optimale Schaltdrehzahl und das Erreichen der optimalen Schaltdrehzahl für eine manuelle Hochschaltung angezeigt.

Hierdurch wird eine optimale Fahrerassistenz gewährleistet und durch multifunktionalen Einsatz des ohnehin vorhandenen beleuchtbaren Skalenbereichs eine zusätzliche Anzeigeeinheit vermieden.

Vorzugsweise wird die Annäherung an die optimale Schaltdrehzahl und das Erreichen der optimalen Schaltdrehzahl im Vergleich mit der temperaturabhängigen Anzeige des oberen Drehzahlbereichs (z. B. durch zunehmendes Erlöschen des beleuchteten Skalenbereichs von links nach rechts) in gegenläufigem Sinne (z. B. durch zunehmendes Aufleuchten des beleuchtbaren Skalenbereichs von rechts nach links) angezeigt. Durch die Gegenläufigkeit der Anzeige werden die Funktionsunterschiede unterstrichen.

Die Anzeige der Annäherung an die optimale Schaltdrehzahl und des Erreichens der optimalen Schaltdrehzahl findet vorteilhafterweise nur bei warmgelaufener Brennkraftmaschine statt. Denn nur dann steht der beleuchtbare Skalenbereich für diese Funktion vollständig zur Verfügung.

Die Ansteuerung des erfindungsgemäßen Drehzahlanzeigeinstruments findet durch ein Steuergerät statt, das beispielsweise für die Steuerung der Brennkraftmaschine und/oder des Getriebes ohnehin im Fahrzeug vorgesehen wird. Dieses Steuergerät steuert das Drehzahlanzeigeinstrument zur Anzeige der Annäherung an die optimale Schaltdrehzahl und des Erreichens der optimalen Schaltdrehzahl zumindest in Abhängigkeit vom Drehzahlgradienten an. Hierbei können zusätzlich auch die Fahrpedalstellung und/oder die zu erwartende Reaktionszeit des Fahrers zwischen der Anzeige des Erreichens des optimalen Schaltzeitpunktes und dem Ausführen der Hochschaltung bzw. des Hochschaltbefehls berücksichtigt werden.

In der Zeichnung ist ein Ausführungsbeispiel der Erfindung dargestellt. Es zeigt
- Fig. 1: eine Gesamtansicht des erfindungsgemäßen Drehzahlanzeigeinstruments
- Fig. 2: zwei verschiedene Anzeige-Stati des beleuchtbaren Skalenbereichs.

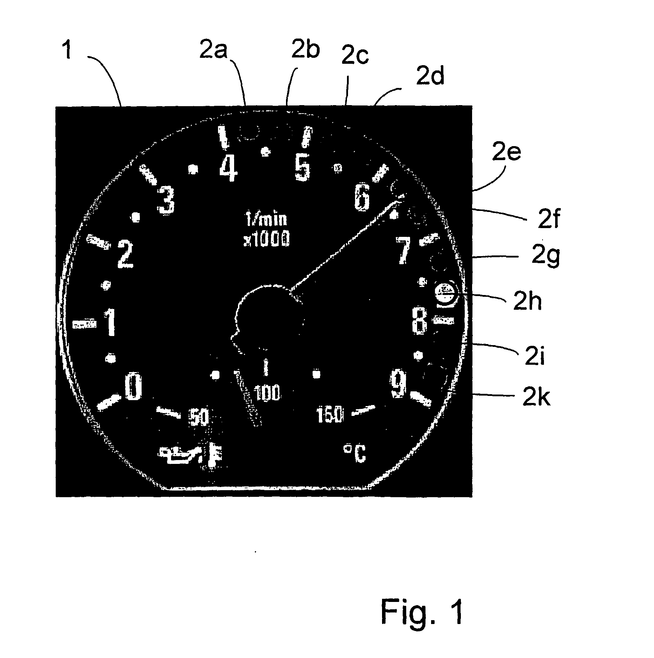

In Figur 1 ist grundsätzlich ein Drehzahlanzeigeinstrument 1 dargestellt, das äußerlich nahezu dem vom BMW M3 bekannten Drehzahlanzeigeinstrument entspricht (funktionelle Beschreibung siehe auch oben). Das Drehzahlanzeigeinstrument 1 enthält einen beleuchtbaren Skalenbereich, der sich aus den Leuchtsektoren 2a bis 2k zusammensetzt. (Der Skalenbereich könnte auch beispielsweise kontinuierlich beleuchtet werden.) Der Skalenbereich erstreckt sich hier über den Drehzahlbereich von 4000 U/min bis ca. 9000 U/min. Unterschiedlich zum Stand der Technik ist, dass der Leuchtsektor 2a des beleuchtbaren Skalenbereichs rot statt orange ist. (Es könnte auch noch Leuchtsektor 2b rot statt orange sein.)

Bei kalter Brennkraftmaschine sind alle Leuchtsektoren 2a bis 2k beleuchtet. Der Leuchtsektor 2h ist stets orange und die Leuchtsektoren 2i und 2k sind stets rot beleuchtet. Die Beleuchtung der Leuchtsektoren 2h bis 2k bleiben auch bei "warmgelaufener" Brennkraftmaschine als Warnfeld unabhängig von der Motortemperatur stets beleuchtet, da diese Sektoren Drehzahlwerten zugeordnet sind, die vermieden werden müssen, um die Brennkraftmaschine nicht zu überdrehen. Mit zunehmender Motortemperatur erlöschen mehr und mehr Leuchtsektoren des Skalenbereichs in Richtung höherer Drehzahlwerte (von links nach rechts), also beginnend mit 2a, dann 2b, dann 2c bis 2g. Der jeweils temperaturabhängig beleuchtete Skalenbereich zeigt an, dass eine Fahrweise gewählt werden soll, durch die Drehzahlen im jeweils beleuchteten Skalenbereich nicht erreicht werden sollen.

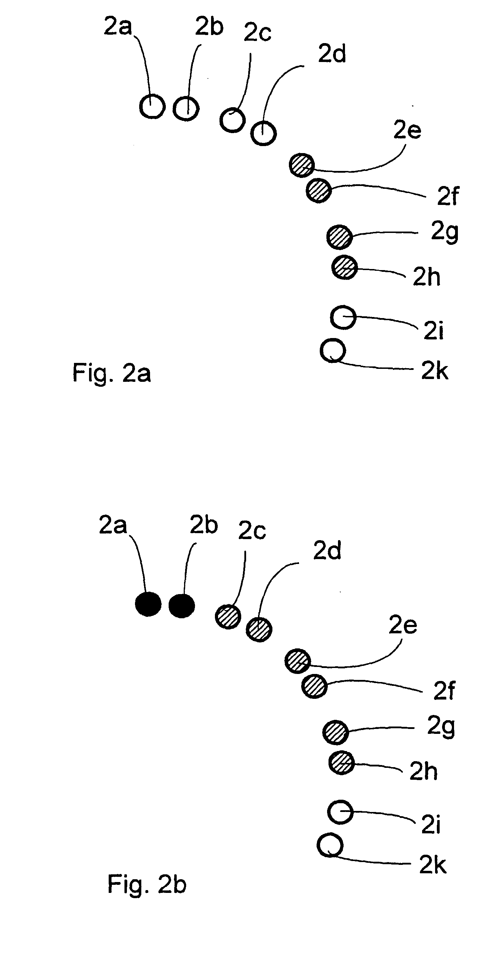

Erfindungsgemäß wird vorzugsweise bei warmgelaufener Brennkraftmaschine mittels desselben variabel beleuchtbaren Skalenbereichs auch die Annäherung an die optimale Schaltdrehzahl und das Erreichen der optimalen Schaltdrehzahl für eine manuelle Hochschaltung angezeigt. Hierzu werden die Leuchtsektoren 2g bis 2a im Vergleich mit der temperaturabhängigen Anzeige des oberen Drehzahlbereichs in gegenläufigem Sinne angesteuert. Bei zunehmender Annäherung der Ist-Drehzahl an die optimale Schaltdrehzahl und damit an den optimalen Hochschaltzeitpunkt werden beginnend mit Leuchtsektor 2g mehr und mehr Leuchtsektoren des Skalenbereichs in Richtung niedrigerer Drehzahlwerte (von rechts nach links), also beginnend mit 2g, dann 2f, dann 2e bis 2a, beleuchtet (vgl. Fig. 2a und 2b). In Fig. 2a ist der Anzeige-Status für eine Annäherung auf etwa "halbem Wege" dargestellt. Fig. 2b zeigt den Anzeige-Status für ein Erreichen der optimalen Schaltdrehzahl. Leuchtsektor 2a ist zur Hervorhebung dieses Status rot beleuchtet. Nach dem Ausführen des Hochschaltbefehls durch den Fahrer erlöschen alle Leuchtsektoren 2a bis 2g auf einmal.

Die Erfindung ist besonders vorteilhaft für Fahrzeuge mit teilweise automatisiertem Sportgetriebe, das einen manuellen sequenziellen Modus aufweist. Dieses Sportgetriebe weist kein Kupplungspedal auf. Die Kupplung wird automatisch mittels eines Steuergeräts angesteuert. Im sequenziellen Modus können die Gänge manuell mittels elektrischer Schalter (+/-) nacheinander hoch- bzw. zurückgeschaltet werden. Genauer gesagt werden durch die Betätigung des elektrischen Schalters Hochschalt- und Rückschaltbefehle an das Steuergerät abgegeben. Das Steuergerät steuert daraufhin das Getriebe für einen Gangwechsel an. Das Fahrpedal ist hierbei vorzugsweise elektrisch mit einem Sensor zur Ermittlung der Fahrpedalstellung. Vom Steuergerät wird u. a. die Fahrpedalstellung und die Drehzahl ermittelt. Unter Berücksichtigung dieser beiden Parameter und unter Berücksichtigung der zu erwartenden Reaktionszeit des Fahrers zwischen der Anzeige des Erreichens des optimalen Schaltzeitpunktes und dem Ausführen des Hochschaltbefehls wird die Anzeige des optimalen Schaltzeitpunktes angesteuert. Somit wird die Anzeige des Erreichens der optimalen Schaltdrehzahl bereits kurz vor dem tatsächlichen Erreichen der optimalen Schaltdrehzahl ausgelöst. Die Anzeige der optimalen Schaltdrehzahl entspricht funktionell daher der Anzeige des optimalen Schaltzeitpunktes zum Ausführen des Hochschaltbefehls.

Eine Kombination eines sequenziell schaltbaren Getriebes mit dem erfindungsgemäßen Drehzahlanzeigeinstrument ermöglicht optimales Schalten mit minimaler Zugkraftunterbrechung.

## Patentansprüche

1. Drehzahlanzeigeinstrument für Kraftfahrzeuge, bei dem ein variabel beleuchtbarer Skalenbereich zur temperaturabhängigen Anzeige eines oberen zu vermeidenden Drehzahlbereichs der Brennkraftmaschine vorgesehen ist, **dadurch gekennzeichnet, dass** mittels desselben variabel beleuchtbaren Skalenbereichs auch die Annäherung an die optimale Schaltdrehzahl und das Erreichen der optimalen Schaltdrehzahl für eine manuelle Hochschaltung angezeigt wird.

2. Drehzahlanzeigeinstrument nach Patentanspruch 1, **dadurch gekennzeichnet, dass** die Annäherung an die optimale Schaltdrehzahl und das Erreichen der optimalen Schaltdrehzahl im Vergleich mit der temperaturabhängigen Anzeige des oberen zu vermeidenden Drehzahlbereichs in gegenläufigem Sinne angezeigt wird.

3. Drehzahlanzeigeinstrument nach Patentanspruch 1 oder 2, **dadurch gekennzeichnet, dass** die Anzeige der Annäherung an die optimale Schaltdrehzahl und des Erreichens der optimalen Schaltdrehzahl nur bei warmgelaufener Brennkraftmaschine stattfindet.

4. Steuergerät zur Ansteuerung des Drehzahlanzeigeinstruments (1) nach einem der Patentansprüche 1 bis 3.

5. Steuergerät nach Patentanspruch 4, **dadurch gekennzeichnet, dass** es das Drehzahlanzeigeinstrument (1) zur Anzeige der Annäherung an die optimale Schaltdrehzahl und des Erreichens der optimalen Schaltdrehzahl in Abhängigkeit vom Drehzahlgradienten ansteuert.

## Claims

1. An engine speed indicator for motor vehicles, in which a scale range, which can be variably illuminated for the temperature-dependent display of an upper engine speed range to be avoided of the internal-combustion engine is provided, **characterised in that** the approaching of the optimal shifting speed and the reaching of the optimal shifting speed for a manual upshift is also indicated by means of the same scale range which can be variably illuminated.

2. An engine speed indicator according to claim 1, **characterised in that** the approaching of the optimal shifting speed and the reaching of the optimal shifting speed is shown in comparison with the temperature-dependent display of the upper engine speed range to be avoided in the opposite direction.

3. An engine speed indicator according to claim 1 or 2, **characterised in that** the display of the approaching of the optimal shifting speed and the reaching of the optimal shifting speed only takes place with the internal-combustion engine warmed up.

4. A controller for activating the engine speed indicator (1) according to any one of claims 1 to 3.

5. A controller according to claim 4, **characterised in that** it activates the engine speed indicator (1) to display the approaching of the optimal shifting speed and the reaching of the optimal shifting speed as a function of the speed gradient.

## Revendications

1. Instrument d'affichage de la vitesse de rotation de véhicule automobile dans lequel une plage de l'échelle éclairée de manière variable, assure l'affichage en fonction de la température, d'une plage supérieure de vitesses de rotation à éviter, pour le moteur à combustion interne, instrument **caractérisé en ce que**
la plage d'échelle éclairée de manière variable affiche également l'approche de la vitesse de commutation optimale et l'arrivée à la vitesse de commutation optimale pour une montée manuelle des rapports de vitesses.

2. Instrument d'affichage de la vitesse de rotation selon la revendication 1,
**caractérisé en ce que**
l'approche de la vitesse de rotation de commutation optimale et l'atteinte de la vitesse de rotation de commutation optimale, sont affichées par comparaison avec l'affichage en fonction de la température de la plage supérieure des vitesses de rotation à éviter, en sens opposé.

3. Instrument d'affichage de la vitesse de rotation selon la revendication 1 ou 2,
**caractérisé en ce que**
l'affichage de l'approche de la vitesse de rotation de commutation optimale et l'atteinte de la vitesse de rotation de commutation optimale, ne se font que pour un moteur à combustion interne, chaud.

4. Appareil de commande de l'instrument d'affichage de la vitesse de rotation (1) selon l'une des revendications 1 à 3

5. Appareil de commande selon la revendication 4,
**caractérisé en ce que**
l'instrument d'affichage de la vitesse de rotation (1) est commandé pour afficher l'approche de la vitesse de rotation de commutation optimale et l'atteinte de la vitesse de rotation de commutation optimale en fonction du gradient de la vitesse de rotation.
